# EUROPEAN PATENT APPLICATION

(11) **EP 4 530 032 A1**
(43) Date of publication of application: **02.04.2025**
(21) Application number: 23200395.4
(22) Date of filing: 28.09.2023
(51) Int. Cl.: B25J 15/00, B25J 15/06

(54) **VACUUM GRIPPER AND METHOD FOR PICKING UP A PLANAR WORKPIECE AND STACKING APPARATUS FOR PICKING UP AN ELECTRODE**

(71) Applicant: CUSTOMCELLS Holding GmbH, 25524 Itzehoe (DE)
(72) Inventor: Kaiser, Bernd, Itzehoe (DE)
(74) Representative: LKGLOBAL Lorenz & Kopf Patentanwalt Attorney at Law PartG mbB

(57) **Abstract**

The invention relates to a vacuum gripper (1) for picking up a planar workpiece (W), comprising
- a gripper plate (2), comprising a first segment (2a) and at least a second segment (2b), the first and second segment (2a, 2b) being connected to one another via a first elastically bendable portion (3a), wherein at least the segments (2a, 2b) are arranged to form a gripping surface (4),
- holding elements (5a, 5b) for holding the workpiece (W) by means of vacuum, wherein at least one first holding element (5a) being arranged on a first gripping surface section (4a) of the gripping surface (4) associated with the first segment (2a) and at least one second holding element (5b) being arranged on a second gripping surface section (4b) of the gripping surface (4) associated with the second segment (2b),
- at least one first pneumatic actuator (7a), which is operatively connected to the first and second segment (2a, 2b) of the gripper plate (2), wherein the vacuum gripper (1) is configured such that, when the first holding element (5a), the second holding (5b) and the first pneumatic actuator (7a) are evacuated, said workpiece (W) is held by said first and second holding element (5a, 5b) and said first segment (2a) is pivoted around said first elastically deformable portion (3a) relative to said second segment (2b) by means of the first pneumatic actuator (7a) to bend the workpiece (W) at a first bending section (B1).

## Description

### FIELD OF THE DISCLOSURE

The present disclosure relates to a vacuum gripper and method for picking up a planar workpiece. The present disclosure further relates to a stacking apparatus for picking up and placing electrodes.

### BACKGROUND

The demand for lithium-ion batteries is increasing not only due to the rapidly growing market for electric vehicles. As long ranges and high efficiency play an increasingly important role, the quality and performance demands on batteries and their production processes are also constantly increasing.

In industrial processing of electrodes, either large-area grippers or grippers with bellows suction pads or cups or a combination thereof are used.

Stacked planar electrodes, i.e. electrodes laminated on both sides with a separator, can be damaged by electrostatic charge of the separator during the pick-and-place-process. Furthermore, due to displacement of air a vacuum-effect can occur between two adjacent electrodes, which makes the individual electrode layers adhere to each other. When building up a stack of electrodes, i.e. by using a pick-and-place method with a vacuum gripper, several layers can be unintentionally picked up at the same time.

The separation of such electrodes adhering to each other is usually carried out by means of separation nozzles which separate the electrodes with compressed air. Brushes along which the electrodes are pulled is used as well as bending of the electrodes.

### SUMMARY OF THE DISCLOSURE

Currently, it remains desirable to provide a vacuum gripper and a method for picking up and placing a planar workpiece as well as a stacking apparatus for picking up and placing electrodes, that reduces the interference and possible damage to the electrodes, i.e. that prevents double picking of workpieces or electrodes adhering to each other when building a stack in a pick-and-place process.

Therefore, the present disclosure relates in a first aspect to a vacuum gripper for picking up a planar workpiece, comprising a gripper plate, comprising a first segment and at least a second segment, the first and second segment being connected to one another via a first elastically bendable portion, wherein at least the segments are arranged to form a gripping surface, the vacuum gripper further comprising holding elements for holding the workpiece by means of vacuum, wherein at least one first holding element being arranged on a first gripping surface section of the gripping surface associated with the first segment and at least one second holding element being arranged on a second gripping surface section of the gripping surface associated with the second segment, the vacuum gripper further comprising at least one first pneumatic actuator, which is operatively connected to the first and second segment of the gripper plate, wherein the vacuum gripper is configured such that, when the first holding element, the second holding element and the first pneumatic actuator are evacuated, said workpiece is held by said first and second holding element and said first segment is pivoted around said first elastically deformable portion relative to said second segment by means of the first pneumatic actuator to bend the workpiece at a first bending section.

The planar workpiece is a flat element, for example a planar battery electrode, which may be stacked on a pile of electrodes. The planar workpiece may be a sheet metal or the like.

The gripper plate consists of at least two segments, wherein the two segments being connected to each other via a elastically bendable portion. The elastically bendable portion is preferably formed as a hinge, especially a film hinge. The elastically bendable portion may extend over at least one section or in one piece over the entire width of the gripper plate.

The segments can be made of solid material or in the form of a frame or the like, i.e. to lower the weight of the gripper plate. The second segment is to be understood as the base element of the gripper plate that is not arranged pivotable or the like, wherein the at least first segment as well as optional further segments are each connected to the second segment via a respective elastically bendable portion and are arranged pivotable relative to the second segment.

The segments of the gripper plate are arranged such that one end face of each segment, in particular the respective end face facing the workpiece, lies in a common plane with respect to the other end faces of the other segments to form the flat or even gripper surface. The respective elastically bendable portion may also be arranged such that it also has a surface in particular the respective surface facing the workpiece, that lies in the common plane with the respective end faces of the segments forming the gripping surface. The gripping surface is arranged such that it at least in sections may come into contact with the workpiece.

The holding elements of the vacuum gripper are configured to each being evacuatable by said means of vacuum in order to suction and hold the workpiece towards and/or to the gripper plate during a pick-up process of the workpiece. By arranging at least one holding element on each segment the workpiece is held with respect to the respective segment so that a relative movement between the segments causes a corresponding relative movement of the respective sections of the workpiece which are sucked in by the holding elements.

Said relative motion between the segments is generated by the at least one first pneumatic actuator. Said pneumatic actuator can be a bellows, a hub cylinder or the like. A bellows can be an elastic, accordion-like collapsible element that can be stretched or shortened by compression. Bellows can have a wide variety of cross-sectional shapes. They often consist of a rotationally symmetrical body in which folds are formed in a longitudinally offset manner, so that they can be pulled apart or folded together like an accordion. Other cross-sectional shapes deviating from a rotationally symmetrical body are also conceivable. The first pneumatic actuator is designed such that a relative motion between the pivotable segment and the second segment is possible.

The evacuation of the at least one first pneumatic actuator and the holding elements by means of vacuum causes the first segment to pivot, i.e. twist or rotate, about a rotation axis, which is defined by the first elastically deformable portion, causing the gripper surface to bend at the first elastically deformable portion, resulting in bending or buckling of the workpiece in a corresponding section. The term "bending of the gripper surface" means, that during evacuation of the first holding element, the second holding element and the at least first pneumatic actuator the first section of the gripper surface, which is associated with the first segment and which receives at least one of said holding elements, is moved about the rotation axis defined by the first elastically deformable portion such that the first gripping surface section and the second gripping surface, which is associated with the second segment and which receives another one of said holding elements, are arranged with an angle to each other. Thus, by bending the gripper surface the workpiece is bent accordingly, so that, because only the picked-up workpiece was sucked in by the vacuum means of the vacuum gripper, any workpiece or workpieces adhering to the picked-up workpiece fall off the picked-up workpiece automatically or are not picked-up at all.

In a first alternative the holding elements and the first pneumatic actuator are pneumatically connected to a common decompression chamber, wherein the holding elements and the first pneumatic actuator are evacuatable by evacuating said decompression chamber. The common decompression chamber may be a vacuum chamber, or a Venturi chamber configured to generate low pressure based on a venturi effect. By using the Venturi effect no vacuum chamber as such is needed, since according to the Venturi effect, the flow velocity of a fluid flowing through a tube is inversely proportional to the changing cross-section of the tube, creating a negative pressure, which can be used for sucking in the workpiece.

In a second alternative the holding elements are pneumatically connected to a first decompression chamber and the first pneumatic actuator is pneumatically connected to a second decompression chamber, wherein the holding elements are evacuatable by evacuating said first decompression chamber and the first pneumatic actuator is evacuatable by evacuating said second decompression chamber. The first decompression chamber may be configured as a vacuum chamber or a Venturi chamber according to the first alternative. Thus, reference is made to the statements above. The second decompression chamber may alternatively be configured as a compression chamber and thus may cause an increased pressure in the first pneumatic actuator. For example, when the first pneumatic actuator is designed as a bellows for example, the second decompression chamber can be configured such that a positive and a negative pressure may be created alternately in order to pivot the first segment relative to the second segment in one or the opposite direction, while at the same time the first decompression chamber holds the workpiece to the vacuum gripper, i.e. the holding elements. This way an oscillating motion of the first segment relative to the second segment may be provided to prevent double picking of electrodes.

In this sense according to a further option at least one of the segments of the gripper plate is configured to being set into oscillations. The oscillating motion is generated by alternately evacuating and filling the second (de)compression chamber according to above statements. The oscillating motion may be generated for a predefined time, which may for example be set according to previous tests. The oscillating motion may alternatively be generated for as long as a sensor or other detecting means registers that more than one workpiece has been picked up by the vacuum gripper or until the sensor or other detecting means register that only one workpiece has been picked up by the vacuum gripper. One advantage here is that no resonant frequency is achieved with this principle, as the movement or motion of the first and optionally further segments other than the second segment is too slow.

The term "predefined" may be used to describe a parameter, such as time, that has already been set up or defined before it is used or applied. "Predefined" may refer to a set of instructions, values, or settings that may have already been established and are ready to be used. Another term for "predefined" may be "predetermined".

In an example the vacuum gripper further comprises a sensor system configured to detect whether further workpieces adhere to the held workpiece. In other words, the sensor system is configured to register or sensor either if more than one workpiece has been picked up by the vacuum gripper or if only one workpiece has been picked up by the vacuum gripper. The sensor system may comprise a magnetic resonance sensor, a hall sensor, a weight sensor and/or an optical sensor or a combination thereof. An optical sensor may be configured to measure the thickness of the workpiece, i.e. the workpieces when two or more workpieces have been picked up. In this sense, according to this disclosure further workpieces adhering to said held workpiece may be detected by means of a sensor system.

To better prevent double picking of workpieces it may be beneficial to provide more than one segment pivotable to the base or the second segment. Therefore, in a further option the vacuum gripper comprises a third segment, the third segment being connected to the second segment on a side opposite to the first segment via a second elastically deformable portion, wherein furthermore the third segment is arranged to form the gripping surface, at least one third holding element being arranged on a third gripping surface section of the gripping surface associated with the third segment, at least one second pneumatic actuator, which is operatively connected to the second and third segment of the gripper plate, wherein the vacuum gripper is configured such that, when the third holding element and the second pneumatic actuator are evacuated, said workpiece is held by said third holding element and said third segment is pivoted around said second elastically deformable portion relative to said second segment by means of the second pneumatic actuator to bend the workpiece at a second bending section different from the first bending section.

The second segment is arranged between the first and third segments, be connected to them via a respective elastically deformable portion. Regarding the second elastically deformable portion, the gripping surface, the third holding element, the third gripping surface section and the second pneumatic actuator reference is made to the respective sections above.

The evacuation of the first pneumatic actuator, the second pneumatic actuator and the holding elements by means of vacuum causes the first segment to pivot, i.e. twist or rotate, about a rotation axis defined by the first elastically deformable portion and also the third segment to pivot about a rotation axis defined by the second elastically deformable portion. The first and third segments pivot in opposite directions. This causes the gripper surface to bend at two sections, resulting in bending or buckling of the held workpiece at two respective sections. In other words, the first section of the gripper surface, which is associated with the first segment and which receives at least one of said holding elements, is moved about the rotation axis of the first elastically deformable portion and the third section of the gripper surface, which is associated with the third segment and which also receives at least one of said holding elements, is moved about the rotation axis of the second elastically deformable portion such that the first gripping surface section of the gripping surface is arranged with a first angle to the second section of the gripper surface, which is associated with the second segment, and the third gripping surface section of the gripping surface is arranged with a second angle to the second section of the gripper surface. Thus, by bending the first and third gripper surface sections relative to the second gripper surface section the workpiece is bend accordingly such that sections of the bent workpiece are being lifted up from the workpiece under the bent workpiece. In other words, a gap is formed between the bent workpiece and a workpiece under the bent workpiece such that double picking is prevented according to the above statements.

In another option the first and segments are pivoted about the respective elastically deformable portion, i.e. the first and third gripping surface are rotated about the respective elastically deformable portion relative to the second gripping surface, such that the second segment protrudes relative to the first and third segment, meaning the second gripping surface protrudes relative to the first and second gripping surfaces.

In one example the gripper plate and said pneumatic actuator are formed in one piece. In other words, the vacuum gripper may be at least partially, preferably completely, manufactured by 3D printing. It is therefore advantageous to use polyamide for the manufacture of the vacuum gripper.

In a further example at least one of said holding elements is an interchangeable bellows suction cup or a suction opening. Said suction opening is preferably arranged at the gripping surface section associated with the second segment of the vacuum gripper. It is conceivable that multiple suction openings are arranged at the second gripping surface section of the second segment in order to ensure a secure hold of the workpiece at the vacuum gripper when the holding elements are evacuated.

Bellows suction cups are preferably arranged at the gripping surface section associated with the first segment and optionally the third segment of the gripper plate.

A bellows suction cup is usually understood to be an elastic, accordion-like collapsible tube that can be stretched or shortened by compression. Bellows can have a wide variety of cross-sectional shapes. They often consist of a rotationally symmetrical body in which folds are formed in a longitudinally offset manner, so that they can be pulled apart or folded together like an accordion. Other cross-sectional shapes deviating from a rotationally symmetrical body are also conceivable.

The bellows suction cups are used to protect the workpiece from being mechanically stressed or damaged. The bellows suction cups realize a gentle pick up of the workpiece.

The bellows suction cup being interchangeable means the different types of bellows suction cups may be used depending on the design, the material and the field of application of the workpiece. The bellows suction cups may be disassembled from the respective segment.

In another option a joint is arranged between said pneumatic actuator and the associated segment of the gripper plate, which is configured to being pivoted relative to the second segment by means of the associated pneumatic actuator. The joint enables and guides the pivoting of the first and the optional third segment relative to the second segment about the respective elastically deformable portion when the pneumatic actuator is being actuated by means of vacuum.

In a further option the vacuum gripper further comprises a magnet and a coil, which are configured to cause said held workpiece to vibrate at an excitation frequency, optionally at a resonance frequency of the held workpiece. The magnet may be arranged inside and the coil may be arranged outside said pneumatic actuator. The magnet may alternatively be arranged inside the coil and the coil may be arranged inside a joint of the vacuum gripper, or vice versa. Thus, a resonant frequency may be achieved in order to shake off further workpieces adhering to said picked up workpiece during the pick-up. The magnet and the coil can, for example, be arranged together in a unit as a vibrator, e.g. externally, in particular in the area of a joint. In this sense, according to this disclosure said held workpiece is being put into vibration at an excitation frequency by a magnet and a coil, optionally at a resonance frequency of the held workpiece.

The present disclosure relates in a second aspect to a stacking apparatus for picking up and placing electrodes, comprising an electrode carrier arranged to accommodate a plurality of stacked electrodes and a vacuum gripper according to first aspect configured to pick up at least one of the stacked electrodes from the electrode carrier. The electrode carrier can be made of a magazine for receiving and providing workpieces, in particular electrodes, in a stacked or piled manner.

The stacking apparatus may be at least a part of a robot, e.g. a robot arm of a collaborative robot, also known under the term "cobots", wherein the vacuum gripper according to the first aspect is arranged at the robot arm as a tool. The workpiece according to the above descriptions can, in this case, be understood as an electrode for a battery cell, which may be handled, i.e. picked up and placed by the vacuum gripper arranged at the robot.

The robot may pick up single electrode from a stack provided at or in the electrode carrier by evacuating the holding elements of the vacuum gripper in order to place it at or on another arrangement or device for further processing or production of battery cells, wherein the picking-up of more than one electrode is prevented by evacuating the at least one pneumatic actuator of the vacuum gripper in order to bend the electrode during pick-up. For the rest, reference is made to the above statements.

The present disclosure relates in a third aspect to a method for picking up and placing a planar workpiece, the method comprising the steps:
(100) providing a stack of at least two stacked workpieces,
(200) providing a vacuum gripper for picking up a workpiece, comprising a gripper plate, comprising a first segment and at least a second segment, the first and second segment being connected to one another via a first elastically bendable portion, wherein at least the segments are arranged to form a gripping surface, the vacuum gripper further comprising holding elements for holding the workpiece by means of vacuum, wherein at least one first holding element being arranged on a first gripping surface section of the gripping surface associated with the first segment and at least one second holding element being arranged on a second gripping surface section of the gripping surface associated with the second segment, the vacuum gripper further comprising at least one first pneumatic actuator, which is operatively connected to the first and second segment of the gripper plate; and
(400) evacuating the first holding element, the second holding and the first pneumatic actuator so that said workpiece is being held by said holding elements and hereafter said first segment is being pivoted around said first elastically deformable portion relative to said second segment by means of the first pneumatic actuator to bend the workpiece at a first bending section.

The stack of at least two workpieces may be a arranged in or at a workpiece carrier, e.g. an electrode carrier. The method is to be understood as at least part of a pick-and-place-procedure, to pick up a planar workpiece while avoiding double picking and to place it at a predefined spot. For the rest, reference is made to the above statements regarding the first and second aspects.

In an option of this disclosure, when the vacuum gripper also comprises a third segment according to the above statements and examples, in said step (400), when the third holding element and the second pneumatic actuator are being evacuated, said workpiece is held by said third holding element and said third segment is pivoted around said second elastically deformable portion relative to said second segment by means of the second pneumatic actuator to bend the workpiece at a second bending section different from the first bending section. Reference is made to the above statements regarding the first aspect.

In another option at least one of the segments of the gripper plate is set into oscillations. According to the above statements the first decompression chamber is evacuated for sucking in the workpiece, wherein the second decompression chamber is filled while keeping the first vacuum chamber evacuated, and optionally alternately evacuating and filling the second vacuum chamber while keeping the first vacuum chamber evacuated. It is therefore beneficial when the respective pivotable segment can be set into oscillations. By alternately applying vacuum and compressed air to the respective pneumatic actuator, which is connected to the decompression chamber, the respective segment of the gripper plate, i.e. the first segment and optionally the second segment, is pivoted back and forth around the rotation axis provided by the elastically deformable portion.

It is understood that the stacking apparatus according to the second aspect may also be configured to carry out the method according to the third aspect.

Generally, the main advantage of this disclosure is to reliably, rapidly and automated separating double picked workpieces when a workpiece is picked up by the vacuum gripper without damage and without cross-contamination or health hazards, for example by active material in the air. Manual intervention by an operator is no longer necessary. The detected double-pick electrodes fall directly back into a carrier or the like and may be used in a following pick-up step. Hence an advantage of the vacuum gripper according to this disclosure is the avoidance of double picked workpieces, e.g. anodes/cathodes when the workpiece is an electrode.

Further advantages are no damage of the electrodes by the separation process since there is no need for passing brushes and/or shearing stress in the workpiece carrier. In addition, better yield, higher process reliability and shorter cycle times can be provided. The gripper can also be used without intervening in the machine control, but however, a significantly higher success rate is achieved by changing the machine control accordingly. Also, the manufacturing of the vacuum gripper in one piece by additive manufacturing significantly lowers the production costs of the gripper.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1 schematically shows a stacking apparatus for picking up and placing electrodes according to examples of the present disclosure.
Fig. 2 schematically shows a vacuum gripper of the stacking apparatus of Fig. 1 according to a first example of the present disclosure.
Fig. 3 schematically shows a vacuum gripper of the stacking apparatus according to a second example of the present disclosure.
Fig. 4 shows a flowchart of a method for picking up and placing a planar workpiece according to examples of the present disclosure.
Fig. 5 shows a stack of two workpieces or electrodes, a first workpiece or electrode in a state during a pick-up process and a second workpiece or electrode arranged below the top workpiece or electrode.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

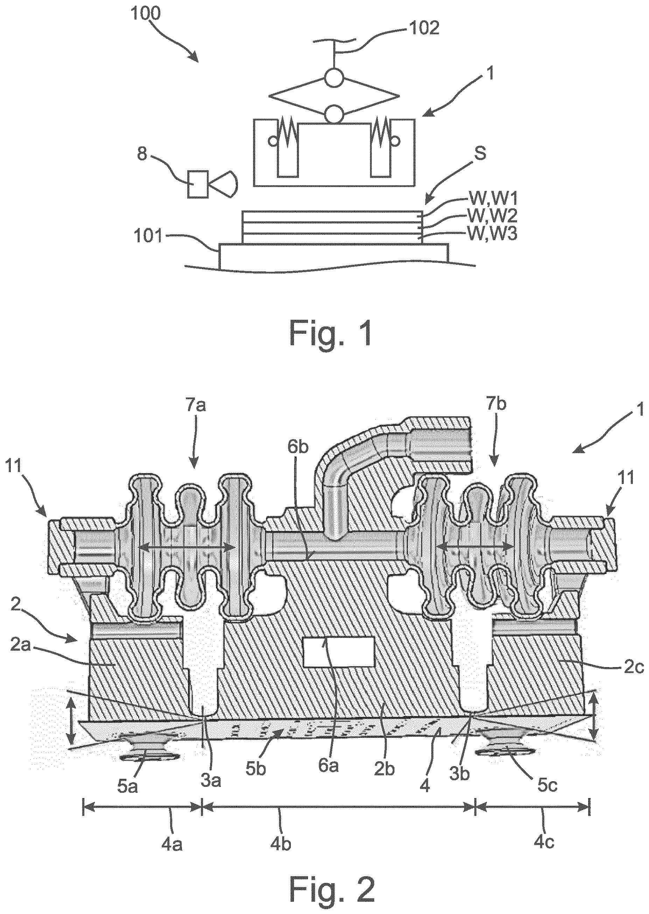

Fig. 1 schematically shows a stacking apparatus 100 for picking up and placing electrodes W1 according to examples of the present disclosure. The stacking apparatus 100 described herein may be part of a manufacturing plant for battery cells, which is not shown in detail. The stacking apparatus 100 comprises an electrode carrier 101 arranged to accommodate a plurality of stacked electrodes W1, W2, W3 and a vacuum gripper 1 configured to pick up at least one, that is the top one W1 of the stacked electrodes W from the electrode carrier 101. The vacuum gripper 1 may be arranged at an arm or arm segment 102 of a robot or other transport devices. The structure and functionalities of the vacuum gripper 1 are described in more detail below.

Fig. 1 also shows a sensor system 8 provided and configured to detect whether further workpieces W, i.e. further electrodes W2, W3, adhere to the picked-up and held workpiece W1, i.e. the top electrode W1, which is also described below in more detail.

Fig. 2 schematically shows said vacuum gripper 1 of Fig. 1 according to a first example of the present disclosure. The vacuum gripper 1 comprises a gripper plate 2, with a first segment 2a, a second segment 2b and a third segment 2c, the first and second segment 2a, 2b being connected to one another via a first elastically bendable portion 3a and the third segment 2c being connected to the second segment 2b on a side opposite to the first segment 2a via a second elastically deformable portion 3b.

The segments 2a, 2b, 2c and the elastically deformable portions 3a, 3b are arranged such that they form a common gripping surface 4 configured to provide and/or receive holding elements 5a, 5b, 5c for picking up and holding the electrode W1 by means of vacuum.

A first holding element 5a is arranged on a first gripping surface section 4a of the gripping surface 4 associated with the first segment 2a. A second holding element 5b is arranged on a second gripping surface section 4b of the gripping surface 4 associated with the second segment 2b. The third holding element 5c is arranged on a third gripping surface section 4c of the gripping surface 4 associated with the third segment 2c. The first and third holding elements 5a, 5c are designed as elastically deformable bellows suction cups. The second holding element 5b is to be understood as a plurality of suction openings distributed on the second gripping surface section 4b of the gripping surface 4.

The first and third holding elements 5a, 5c are configured to receive the top electrode W1 of the electrode stack S at the beginning of the pick-up-process. The second holding element 5b is configured to receive the electrode W1 and to secure the position of the electrode W1 when it comes to rest at the gripping surface 4, i.e. the second gripping surface section 4b.

The vacuum gripper 1 further comprises a first pneumatic actuator 7a and a second pneumatic actuator 7b, wherein the first pneumatic actuator 7a is operatively connected to the first and second segment 2a, 2b of the gripper plate 2 and the second pneumatic actuator 7b is operatively connected to the second and third segment 2b, 2c of the gripper plate 2. The pneumatic actuators 7a, 7b are arranged on opposite sides at the second segment 2b, wherein between the first pneumatic actuator 7a and the first segment 2a of the gripper plate 2 a first joint 11 is arranged configured to enable pivoting of the first segment 2a relative to the second segment 2b as well as lengthening or compression of the first pneumatic actuator 7a. Another joint 11 is arranged between the second pneumatic actuator 7b and the third segment 2c of the gripper plate 2, the joint 11 being configured to enable pivoting of the third segment 2b relative to the second segment 2b as well as lengthening or compression of the second pneumatic actuator 7b.

The segments 2a, 2b, 2c, the elastically deformable portions 3a, 3b, the joints 11 and the pneumatic actuators 7a, 7b are formed in one piece, being manufactured by 3D printing, e.g. made of polyamide.

The holding elements 5a, 5b are pneumatically connected to a first decompression chamber 6a and the pneumatic actuators 7a, 7b are pneumatically connected to a second decompression chamber 6b, wherein the holding elements 5a, 5b are evacuatable by evacuating said first decompression chamber 6a and the pneumatic actuators 7a, 7b are evacuatable by evacuating said second decompression chamber 6b.

The vacuum gripper 1 is configured such that, when the holding elements 5a, 5b, 5c are evacuated by the first decompression chamber 6a and the first pneumatic actuator 7a and the second pneumatic actuator 7b are evacuated by the second decompression chamber 6b, said electrode W1 is picked-up and held by the holding element 5a, 5b, 5c and, at the same time, the first segment 2a is pivoted around said first elastically deformable portion 3a relative to said second segment 2b due to the first pneumatic actuator 7a being lengthened or compressed such that the electrode W1 is bend at a first bending section B1 and on the opposite side of the second segment 2b the third segment 2c is pivoted around said second elastically deformable portion 3b relative to said second segment 2b due to the second pneumatic actuator 7b also being lengthened or compressed such that the electrode W1 is bend at a second bending section B2.

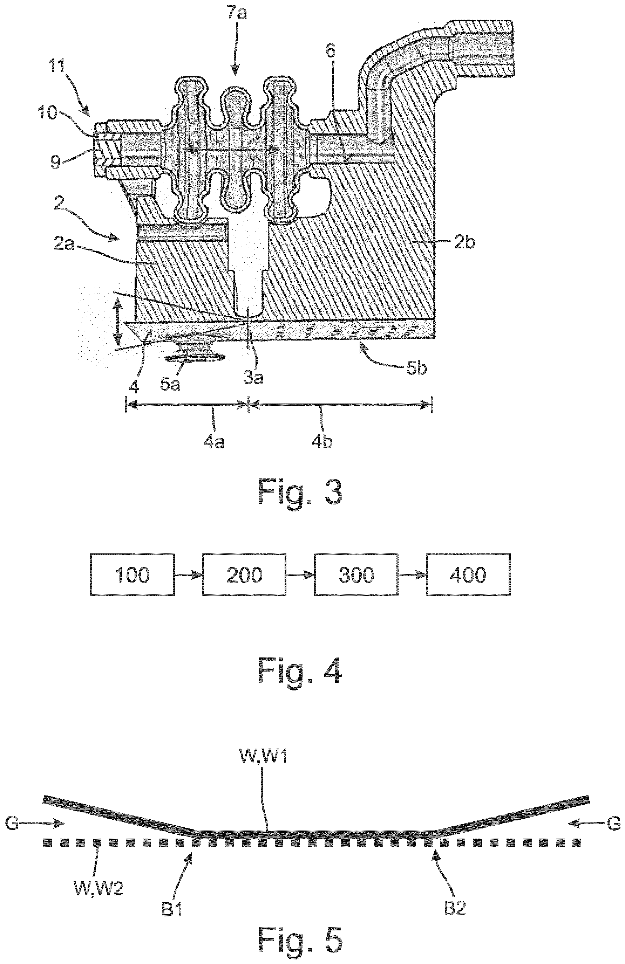

The electrode W, W1 bent by the vacuum gripper 1 according to Fig. 3 is shown in Fig. 5. For better understanding the electrode W, W1 is shown exaggeratedly bent. By bending the electrode W, W1 a gap G is created at both ends of the electrode W, W1 between the picked-up top electrode W, W1 and the electrode W, W2 below the electrode W, W1, the second electrode W, W2 being shown herein as a dashed line, so that any vacuum-effect between the electrodes W1, W2 is dissolved in order to prevent double picking. After the first electrode W, W1 has been picked-up and repositioned the second electrode W, W2 becomes the top electrode W1.

Due to the two different decompression chambers 6a, 6b the first and third segment 2a, 2c may be configured to being set into oscillations. For example, the second decompression chamber 6b associated with the pneumatic actuators 7a, 7b may be configured such that a positive and a negative pressure may be created alternately by alternating filling and evacuating the pneumatic actuators 7a, 7b in order to pivot the first segment 2a and the third segment 2b each relative to the second segment 2b and around the elastically deformable portions 3a, 3b, while at the same time the first decompression chamber 6a sucks in the electrode to the gripper plate 2 by the holding elements 5a, 5b, 5c. By such oscillating motion of the first and third segments 2a, 2c the electrode W1 is bend at said bending sections B1, B2, which prevents double picking of electrodes W2, W3 under the top electrode W1 according to Fig. 1. Herein, the first and third segments 2a, 2c are being pivoted in opposite directions.

Fig. 3 schematically shows a vacuum gripper 1 according to a second example of the present disclosure.

In this example the vacuum gripper 1 comprises a gripper plate 2 with in contrast to the example according to Fig. 2 only two segments, namely the first segment 2a and the second segment 2b, the segments 2a, 2b being connected to one another via a first elastically bendable portion 3a. This is to illustrate, that three segments, as shown in the example according to Fig. 2, do not necessarily have to be provided at the gripper plate 2 in order to carry out the automated shaking-off process to prevent double picking of workpieces W.

The first and second segments 2a, 2b and the first elastically bendable portion 3a are arranged to form the gripping surface 4 of the gripper plate 2. Accordingly, holding elements 5a, 5b for holding the electrode W1 by means of vacuum are provided. The first holding element 5a is formed as a bellows suction cup and is arranged on the first gripping surface section 4a of the gripping surface 4 associated with the first segment 2a. The second holding element 5b is formed as multiple suction openings distributed on a second gripping surface section 4b associated with the second segment 2b.

Furthermore, a single pneumatic actuator 7a is operatively connected to the first and second segment 2a, 2b of the gripper plate 2. The pneumatic actuator 7a is arranged at the second segment 2b and a joint 11 is arranged between the pneumatic actuator 7a and the first segment 2a. The gripper plate 2 with the segments 2a, 2b, the elastically deformable portion 3a, the joint 11 and the pneumatic actuator 7a are formed in one piece accordingly.

The mode of operation for picking-up and shaking-off further workpieces W2, W3 adhering to the picked-up top electrode W1 is to be understood analogously to the previous example according to Fig. 2. Thus, reference is made to the above statements, examples, and descriptions.

A significant difference to the first example according to in Fig. 3 is that the holding elements 5a, 5b and the first pneumatic actuator 7a are pneumatically connected to a common decompression chamber 6, wherein the holding elements 5a, 5b and the pneumatic actuator 7a are evacuatable by evacuating said decompression chamber 6. When the first holding element 5a, the second holding element 5b and the first pneumatic actuator 7a are evacuated, wherein the picked up electrode W1 is held by the holding elements 5a, 5b and the first segment 2a is pivoted around said first elastically deformable portion 3a relative to said second segment 2b by means of the pneumatic actuator 7a in order to bend the electrode W1 at its first bending section B1.

In this example, the vacuum gripper 1 also comprises a magnet 9 and a coil 10, which are arranged at the joint 11, the magnet 9 being longitudinally displaceable relative to the coil 10. The coil 10 may be supplied with electrical energy to generate a magnetic field in order to axially moving the magnet 9 relative to the coil 10. By applying appropriate current, the magnet 9 may be moved alternately back and forth to cause oscillatory motion of the first segment 2a relative to the second segment 2b. This causes the held electrode W1 to vibrate at an excitation frequency, optionally at a resonance frequency of the held electrode W1 in order to shake off possibly adhering electrodes W2, W3. The vibration can continue or be performed as long as the sensor system 8 shown in Fig. 1 detects that more than one electrode W has been picked up by the vacuum gripper 1, i.e. a double pick has occurred.

Fig. 4 shows a flowchart of a method for picking up and placing a planar workpiece W according to examples of the present disclosure.

A stack S of at least two stacked workpieces W, W1, W2, W3 is provided in a first step 100. In a second step 100 a vacuum gripper 1 according to Fig. 3 is provided for picking up the top workpiece W, W1, wherein the design of the vacuum gripper 1 is explained above in more detail. Therefore, reference is made here only to the above statements. It goes without saying that the method can also be carried out with a vacuum gripper 1 according to Fig. 2.

In a third step 300 the sensor system 8 shown in Fig. 1 detects whether only one or more electrodes W have been picked up by the vacuum gripper 1. When the sensor system 8 detects that two or more electrodes W have been picked up by the vacuum gripper 1, meaning that at least one further electrode W2 adheres to the picked-up top electrode W1, a fourth step 400 is initiated, wherein the first holding element 5a the second holding elements 5b and the first pneumatic actuator 7a are evacuated by evacuating the decompression chamber 6 so that said electrode W1 is being held by said holding elements 5a, 5b and hereafter said first segment 2a is being pivoted around said first elastically deformable portion 3a relative to said second segment 2b by means of the first pneumatic actuator 7a in order to bend the electrode W1 at a first bending section B1. Since only one segment 2a is pivoted relative to the second segment 2b the electrode W1 is bend at only one section B1.

The step 300 can be skipped if, for example, in each pick-up process a shaking-off step according to step 400 is carried out automatically and precautionary. As a result, the stacking apparatus 100 may be designed simpler and cheaper.

If the vacuum gripper 1 is designed according to the example shown in Fig. 2, then in step (400), when the third holding element 5c and the second pneumatic actuator 7b are being evacuated, said picked-up electrode W, W1 is also held by the third holding element 5c and the third segment 2c of the gripper plate 2 is pivoted around the second elastically deformable portion 3b relative to the second segment 2b by means of the second pneumatic actuator 7b to bend the workpiece W at the second bending section B2 according to the illustration in Fig. 5. In this case at least one of the segments 2a, 2b, 2c of the gripper plate 2, i.e. the first and/or third segment 2a, 2c may be set into oscillations by alternately filling and evacuating the compression chamber associated with the first and/or the second pneumatic actuator 7a, 7b. In an optional further step, the held electrode W, W1 may be put into vibrations at an excitation frequency by a magnet 9 and a coil 10 according to the illustration in Fig. 4.

The advantage of this disclosure is to reliably, rapidly, and automated separating double picked workpieces W when a workpiece W is picked up by the vacuum gripper 1 without damage and without cross-contamination or health hazards, for example by active material in the air. Manual intervention by an operator is also no longer necessary. The detected double-pick electrodes W2, W3 fall directly back into the carrier 101 or the like and may be used in a following pick-up step. Hence an advantage of the vacuum gripper 1 according to this disclosure is the avoidance of double picked workpieces W, e.g. anodes/cathodes when the workpiece W is an electrode W1, W2, W3.

Further advantages are no damage of the electrodes W1, W2, W3 by the separation process since there is no need for passing brushes and/or shearing stress in the workpiece carrier 101. In addition, better yield, higher process reliability and shorter cycle times can be provided. The vacuum gripper 1 can also be used without intervening in the machine control. Also, the manufacturing of the vacuum gripper 1 in one piece by additive manufacturing significantly lowers the production costs of the gripper.

It is understood that each decompression or compression chamber referred to in this disclosure is pneumatically connected to a corresponding pump for generating the required pressure, e.g. the positive or negative pressure depending on the application. It is also possible that the first pneumatic actuator 7a and the second pneumatic actuator 7b are pneumatically connected to a separate decompression chamber, i.e. to a separate pump for generating the required pressure.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

## Claims

1. Vacuum gripper (1) for picking up a planar workpiece (W), comprising
- a gripper plate (2), comprising a first segment (2a) and at least a second segment (2b), the first and second segment (2a, 2b) being connected to one another via a first elastically bendable portion (3a), wherein at least the segments (2a, 2b) are arranged to form a gripping surface (4),
- holding elements (5a, 5b) for holding the workpiece (W) by means of vacuum, wherein at least one first holding element (5a) being arranged on a first gripping surface section (4a) of the gripping surface (4) associated with the first segment (2a) and at least one second holding element (5b) being arranged on a second gripping surface section (4b) of the gripping surface (4) associated with the second segment (2b),
- at least one first pneumatic actuator (7a), which is operatively connected to the first and second segment (2a, 2b) of the gripper plate (2),
wherein the vacuum gripper (1) is configured such that, when the first holding element (5a), the second holding element (5b) and the first pneumatic actuator (7a) are evacuated, said workpiece (W) is held by said first and second holding element (5a, 5b) and said first segment (2a) is pivoted around said first elastically deformable portion (3a) relative to said second segment (2b) by means of the first pneumatic actuator (7a) to bend the workpiece (W) at a first bending section (B1).

2. The vacuum gripper (1) according to claim 1,
wherein the holding elements (5a, 5b) and the first pneumatic actuator (7a) are pneumatically connected to a common decompression chamber (6), wherein the holding elements (5a, 5b) and the first pneumatic actuator (7a) are evacuatable by evacuating said decompression chamber (6),
or
the holding elements (5a, 5b) are pneumatically connected to a first decompression chamber (6a) and the first pneumatic actuator (7a) is pneumatically connected to a second decompression chamber (6b), wherein the holding elements (5a, 5b) are evacuatable by evacuating said first decompression chamber (6a) and the first pneumatic actuator (7a) is evacuatable by evacuating said second decompression chamber (6b).

3. The vacuum gripper (1) according to any one of the preceding claims, the vacuum gripper (1) further comprising
- a third segment (2c), the third segment (2c) being connected to the second segment (2b) on a side opposite to the first segment (2a) via a second elastically deformable portion (3b), wherein furthermore the third segment (2c) is arranged to form the gripping surface (4),
- at least one third holding element (5c) being arranged on a third gripping surface section (4c) of the gripping surface (4) associated with the third segment (2c),
- at least one second pneumatic actuator (7b), which is operatively connected to the second and third segment (2b, 2c) of the gripper plate (2),
wherein the vacuum gripper (1) is configured such that, when the third holding element (5c) and the second pneumatic actuator (7b) are evacuated, said workpiece (W) is held by said third holding element (5c) and said third segment (2c) is pivoted around said second elastically deformable portion (3b) relative to said second segment (2b) by means of the second pneumatic actuator (7b) to bend the workpiece (W) at a second bending section (B2) different from the first bending section (B1).

4. The vacuum gripper (1) according to any one of the preceding claims, wherein at least one of the segments (2a, 2b, 2c) of the gripper plate (2) is configured to being set into oscillations perpendicular to the gripping surface (4).

5. The vacuum gripper (1) according to any one of the preceding claims, wherein the gripper plate (2) and said pneumatic actuator (7a, 7b) are formed in one piece.

6. The vacuum gripper (1) according to any one of the preceding claims, wherein at least one of said holding elements (5a, 5c) is an interchangeable bellows suction cup or a suction opening.

7. The vacuum gripper (1) according to any one of the preceding claims, wherein a joint (11) is arranged between said pneumatic actuator (7a, 7b) and the associated segment (2a, 2c) of the gripper plate (2), which is configured to being pivoted relative to the second segment (2b) by means of the associated pneumatic actuator (7a, 7b).

8. The vacuum gripper (1) according to any one of the preceding claims, further comprising a sensor system (8) configured to detect whether further workpieces (W2) adhere to the held workpiece (W).

9. The vacuum gripper (1) according to any one of the preceding claims, further comprising a magnet (9) and a coil (10), which are configured to cause said held workpiece (W) to vibrate at an excitation frequency, optionally at a resonance frequency of the held workpiece (W).

10. Stacking apparatus (100) for picking up and placing electrodes (W1), comprising an electrode carrier (101) arranged to accommodate a plurality of stacked electrodes (W1, W2) and a vacuum gripper (1) according to one of claims 1 to 9 configured to pick up at least one of the stacked electrodes (W1) from the electrode carrier (101).

11. Method for picking up and placing a planar workpiece (W), comprising:
(100) providing a stack of at least two stacked workpieces (W),
(200) providing a vacuum gripper (1) for picking up a workpiece (W), comprising
- a gripper plate (2), comprising a first segment (2a) and at least a second segment (2b), the first and second segment (2a, 2b) being connected to one another via a first elastically bendable portion (3a), wherein at least the segments (2a, 2b) are arranged to form a gripping surface (4),
- holding elements (5a, 5b) for holding the workpiece (W) by means of vacuum, wherein at least one first holding element (5a) being arranged on a first gripping surface section (4a) of the gripping surface (4) associated with the first segment (2a) and at least one second holding element (5b) being arranged on a second gripping surface section (4b) of the gripping surface (4) associated with the second segment (2b),
- at least one first pneumatic actuator (7a), which is operatively connected to the first and second segment (2a, 2b) of the gripper plate (2),
(400) evacuating the first holding element (5a), the second holding element (5b) and the first pneumatic actuator (7a) so that said workpiece (W) is being held by said holding elements (5a, 5b) and hereafter said first segment (2a) is being pivoted around said first elastically deformable portion (3a) relative to said second segment (2b) by means of the first pneumatic actuator (7a) to bend the workpiece (W) at a first bending section (B1).

12. The method according to claim 11, the vacuum gripper (1) further comprising
- a third segment (2c), the third segment (2c) being connected to the second segment (2b) on a side opposite to the first segment (2a) via a second elastically deformable portion (3b), wherein furthermore the third segment (2c) is arranged to form the gripping surface (4),
- at least one third holding element (5c) being arranged on a third gripping surface section (4c) of the gripping surface (4) associated with the third segment (2c),
- at least one second pneumatic actuator (7b), which is operatively connected to the second and third segment (2b, 2c) of the gripper plate (2),
wherein in step (400), when the third holding element (5c) and the second pneumatic actuator (7b) are being evacuated, said workpiece (W) is held by said third holding element (5c) and said third segment (2c) is pivoted around said second elastically deformable portion (3b) relative to said second segment (2b) by means of the second pneumatic actuator (7b) to bend the workpiece (W) at a second bending section (B2) different from the first bending section (B1).

13. The method according to claim 11 or claim 12, wherein at least one of the segments (2a, 2b, 2c) of the gripper plate (2) is set into oscillations.

14. The method according to any one of claims 11 to 13, wherein further workpieces (W2) adhering to said held workpiece (W) being detected by means of a sensor system (8).

15. The method according to any one of claims 11 to 14, wherein said held workpiece (W) is being put into vibration at an excitation frequency by a magnet (9) and a coil (10), optionally at a resonance frequency of the held workpiece (W).
